# EUROPÄISCHE PATENTSCHRIFT

(11) **EP 2 315 962 B1**
(45) Veröffentlichungstag und Bekanntmachung des Hinweises auf die Patenterteilung: **25.04.2012**
(21) Anmeldenummer: 09777698.3
(22) Anmeldetag: 06.08.2009
(51) Int. Cl.: F16D 27/12, F16H 9/04

(54) **REIBSCHALTKUPPLUNG MIT EINEM VON EINEM ANTRIEBSMOTOR ÜBER EINEN ANTRIEBSRIEMEN ANGETRIEBENEN ANTRIEBSRAD UND ANTRIEBSEINHEIT**
SWITCHABLE FRICTION CLUTCH HAVING A DRIVE WHEEL DRIVEN BY A DRIVE MOTOR VIA A DRIVE BELT, AND DRIVE UNIT
ACCOUPLEMENT DÉBRAYABLE À FROTTEMENT DOTÉ D'UNE ROUE D'ENTRAÎNEMENT ENTRAÎNÉE PAR UN MOTEUR D'ENTRAÎNEMENT AU MOYEN D'UNE COURROIE D'ENTRAÎNEMENT ET UNITÉ D'ENTRAÎNEMENT

(30) Priorität: 22.08.2008 DE 202008011202 U
(43) Veröffentlichungstag der Anmeldung: 04.05.2011
(73) Patentinhaber: Kendrion Linnig GmbH, 88677 Markdorf (DE)
(72) Erfinder: GEBHART, Manfred, 78462 Konstanz (DE)
(74) Vertreter: Dobler, Markus
(86) Internationale Anmeldenummer: PCT/EP2009/005697
(87) Internationale Veröffentlichungsnummer: WO 2010/020349

(56) Entgegenhaltungen:
- WO-A-01/31218
- US-A- 5 871 412
- US-A- 5 909 075
- US-A- 6 146 296
- US-A1- 2006 137 956

## Beschreibung

Die Erfindung betrifft eine Reibschaltkupplung gemäß Anspruch 1 und eine Antriebseinheit nach Anspruch 11.

Antriebseinheiten mit einer schaltbaren Reibkupplung zum insbesondere zweistufigen Antrieb eines Nebenaggregates sind bekannt. Der Antrieb kann mit einem Antriebsmotor erfolgen, der ein Antriebsrad der Antriebseinheit in Drehung versetzt. Bei Antriebseinheiten z.B. für einen Kompressor bzw. Verdichter kann das beispielsweise als Riemenscheibe ausgebildete Antriebsrad über einen Antriebsriemen angetrieben werden. Mittels zweier Elektromagnetanordnungen können jeweils dazugehörige Reibkupplung betätigt werden, um zwei unterschiedliche Drehzahlen der anzutreibenden Nebenaggregatwelle z.B. Kompressorwelle zu realisieren. Die Welle des Nebenaggregats ist beispielsweise in einer zur Drehzahl des Antriebsrads niedrigeren und höheren Drehzahl angetrieben bewegbar

Eine gattungsgemäβe Reibschaltkupplung ist aus US 2006/137956 A bekannt. Aufgabe der vorliegenden Erfindung ist es, eine Reibschaltkupplung bzw. eine entsprechende Antriebseinheit mit einem Antriebsmotor zum Antrieb eines Nebenaggregates in unterschiedlichen Drehzahlen zu verbessern, insbesondere im Hinblick auf eine kompaktere Bauweise bzw. erleichterte Montage.

Diese Aufgabe wird durch die Ansprüche 1 und 11 gelöst. In den abhängigen Ansprüchen sind vorteilhafte Weiterbildungen der Erfindung aufgezeigt.

Die Erfindung geht aus von einer Reibschaltkupplung mit einem von einem Antriebsmotor über einen Antriebsriemen angetriebenen Antriebsrad, wobei eine erste Elektromagnetanordnung zur Betätigung einer ersten Reibkupplung und eine zweite Elektromagnetanordnung zur Betätigung einer zweiten Reibkupplung vorgesehen sind, um bei einer Antriebsraddrehzahl über das Antriebsrad eine Antriebswelle eines Nebenaggregats in unterschiedlichen Drehzahlen antreiben zu können. Die Antriebsraddrehzahl kann für einen betrachteten Betriebszustand eine im Wesentlichen gleichbleibende Drehzahl sein, wobei für nahezu jede realisierbare Drehzahl des Antriebsrads bzw. eine jeweils betrachtete Drehzahl des Antriebsrades die Antriebswelle des Nebenaggregats zur Antriebsraddrehzahl unterschiedlich schnell drehantreibbar ist.

Der Kern der Erfindung liegt darin, dass eine Riementriebanordnung zwischen dem Antriebsrad und der Antriebswelle des Nebenaggregats zum Antrieb der Antriebswelle in den unterschiedlichen Drehzahlen vorgesehen ist. Mit einer Riementriebanordnung kann eine Kraftübertragung zwischen dem Antriebsrad und der Antriebswelle robust und platzsparend realisiert werden. Außerdem kann mit einer Riementriebanordnung auch bei unterschiedlichsten zu überwindenden Abständen der zusammenwirkenden Elemente bzw. bei räumlich schwierigen Gegebenheiten eine zuverlässige Kraft- bzw. Momentenübertragung erreicht werden. Dabei ist es von Vorteil, dass das Antriebsrad selbst insbesondere über genau einen Antriebsriemen antreibbar ist. Das Antriebsrad rotiert dabei mit der durch die variable Drehzahl des Antriebsmotors vorgegebenen Drehzahl und muss vorteilhafterweise in der Drehzahl nicht übersetzt oder untersetzt werden. Damit ist es möglich, schnell eine volle Leistung am Antriebsrad abzurufen bzw. höchste Übersetzungen über die Riementriebanordnung oder alternativ niedrige Übersetzungen zu fahren.

Grundsätzlich können in der Praxis ggf. geringfügige bzw. kurzzeitig Drehzahlschwankungen des Antriebsrades auftreten, was für die erfindungsgemäße Anordnung aber aufgrund des mechanischen Verhaltens der Riementriebanordnung unproblematisch ist.

Des Weiteren lassen sich je nach Anwendungsfall verschiedene Über- bzw. Untersetzungsverhältnisse gemäß der mechanischen Grundregeln der wirksamen Durchmesser der riemenverbundenen drehenden Elemente einstellen. Das Nebenaggregat kann insbesondere ein Klima- bzw. Kühlkompressor eines Fahrzeuges mit einem Verbrennungsmotor sein.

Bei derartigen Nebenaggregaten kann es auch gewünscht sein, bei angetrieben drehendem Antriebsrad das Nebenaggregat abzuschalten bzw. passiv zu schalten und in einem situationsangepassten Betriebszustand zu betreiben, zum Beispiel in zumindest zwei unterschiedlichen Leistungsstufen. Bei einem Klimakompressor kann eine niedrigere Leistungsstufe gewählt werden, wenn nur eine vergleichsweise geringe Wärmemenge abgeführt werden soll bzw. eine höhere Stufe bei einer entsprechend größeren gewünschten Wärmeabfuhr. In einer Aufwärm- oder Startphase des Fahrzeugbetriebs wenn ggf. keine überschüssige Wärme abzuführen ist bzw. keine Kompression eines Kühlmittels notwendig ist, kann die Antriebswirkung auf die Kompressorwelle ausgeschalten werden. Damit kann ein dreistufiger Betrieb des Nebenaggregats bereitgestellt werden.

Insbesondere kann die erfindungsgemäße Reibschaltkupplung bzw. Riementriebanordnung ohne Weiteres als Zusatzeinheit an bestehenden Abschnitten angebaut werden, ggf. nachträglich ohne größeren Aufwand.

Ein schnelles und zuverlässiges Schalten kann insbesondere über eine elektromagnetisch betätigbare Reibscheibenkupplung erfolgen.

Weiter wird vorgeschlagen, dass die Drehachse der Antriebswelle des Nebenaggregates parallel versetzt zur Drehachse des Antriebsrades ist. Damit kann neben einer kompakten Bauweise der Reibschaltkupplung eine Vielzahl unterschiedlicher Bauvarianten bzw. Anordnungen der Bauelemente zueinander verwirklicht werden.

Insbesondere kann ein zur Verfügung stehender Bauraum optimiert genutzt werden.

Insbesondere kann ein ggf. axial benötigter Bauraum verringert werden, indem z.B. das Antriebsrad in radialer Richtung zur Drehachse der Antriebswelle des Nebenaggregates versetzt angeordnet wird.

Erfindungsgemäβ umfasst die Riementriebanordnung einen ersten Riementrieb mit einem ersten Treibriemen, welcher auf einem drehbar gelagerten ersten Zwischenrad und einem drehfest mit der Antriebswelle des Nebenaggregates verbundenen Flanschring aufliegt. So kann auf einfache Weise über die Größe der Durchmesser des ersten Zwischenrades und des Flanschringes bzw. der jeweiligen Riemenauflage für den ersten Treibriemen am ersten Zwischenrad bzw. am Flanschring ein Über- bzw. Untersetzungsverhältnis zwischen dem Antriebsrad und der Antriebswelle des Nebenaggregates gewählt werden. Falls gewünscht lässt sich auch eine eins-zu-eins-Übersetzung bzw. eine Drehzahlgleichheit einrichten. Das erste Zwischenrad ist schaltbar bzw. fest verbindbar und wieder entkoppelbar mit einem Gegenabschnitt, welcher bei fester Verbindung das erste Zwischenrad mitnimmt. Der Gegenabschnitt befindet sich insbesondere am Antriebsrad. Über den Flanschring wird dauerhaft die Kopplung mit der Antriebswelle des Nebenaggregates eingerichtet.

Es ist außerdem vorgesehen, dass die Riementriebanordnung einen zweiten Riementrieb mit einem zweiten Treibriemen umfasst, welcher auf dem Antriebsrad und einem drehbar gelagerten zweiten Zwischenrad aufliegt. Auch mit dieser Anordnung können in einem großen Variationsbereich Übersetzungs- bzw. Untersetzungsverhältnisse zwischen dem Antriebsrad und dem zweiten Zwischenrad gewählt werden, wobei das zweite Zwischenrad mit einem Gegenabschnitt einem mit der Antriebswelle des Nebenaggregates verbundenem Abschnitt z.B. dem Flanschring kuppelbar ist.

Für eine vorteilhafte Bereitstellung eines Über- und eines Untersetzungsverhältnisses zwischen dem Antriebsrad und der Antriebswelle des Nebenaggregates kann sich ein Durchmesser einer Riemenauflage für den zweiten Treibriemen am Antriebsrad insbesondere von dem Durchmesser der Riemenauflage für den ersten Treibriemen am ersten Zwischenrad unterscheiden, insbesondere den letztgenannten Durchmesser überschreiten. Der Durchmesser der Riemenauflage am Antriebsrad für den Antriebsriemen liegt insbesondere zwischen diesen vorgenannten Durchmessern der jeweiligen Riemenauflagen. Die Riemenauflagen sind insbesondere durch parallel ausgerichtete und kreisförmig umlaufende keilförmige Nuten gebildet, in welche passende Keilriemenabschnitte der als Keilriemen ausgebildeten Treibriemen kraftübertragend aufliegen.

Besonders vorteilhaft ist es, dass die erste Reibkupplung ausgebildet ist, das erste Zwischenrad und das Antriebsrad bei geschalteter erster Reibkupplung reibschlüssig zu verbinden. So kann in diesem Schaltzustand gezielt der Treibriemen am Antriebsrad aktiv gesetzt werden, welcher am ersten Zwischenrad aufliegt. Bei nicht geschalteter erster Reibkupplung wird die Reibschlussverbindung bzw. die Kraftübertragung zwischen dem Antriebsrad und dem erstem Zwischenrad selbsttätig aufgehoben.

Weiter ist es von Vorteil, dass die zweite Reibkupplung ausgebildet ist, das zweite Zwischenrad und den Flanschring bei geschalteter zweiter Reibkupplung reibschlüssig zu verbinden. Damit kann unabhängig mit der zweiten Reibkupplung das zweite Zwischenrad und der Flanschring verbunden werden, wodurch ein Schaltzustand möglich ist, welcher sich vom Schaltzustand bei geschalteter erster Reibkupplung unterscheidet. Auch hier findet bei nicht geschalteter zweiter Reibkupplung eine Entkopplung des zweiten Zwischenrades von dem Flanschring statt zum Beispiel über Federmittel.

In einer vorteilhaften Modifizierung des Erfindungsgegenstandes ist die Riementriebanordnung derart ausgebildet, dass bei geschalteter erster Reibkupplung die Antriebswelle des Nebenaggregates in einer ersten Drehzahl dreht. So kann über einen Schaltvorgang eine erste gewünschte Drehzahl der Antriebswelle des Nebenaggregates vorgegeben werden. Die erste Drehzahl der Antriebswelle des Nebenaggregates ist insbesondere eine zur Drehzahl des Antriebsrades unterschiedliche Drehzahl z.B. eine niedrigere Drehzahl.

Vorteilhafterweise ist die Riementriebanordnung derart ausgebildet, dass bei geschalteter zweiter Reibkupplung die Antriebswelle des Nebenaggregates in einer zweiten Drehzahl dreht, welche sich von der ersten Drehzahl bei geschalteter erster Reibkupplung unterscheidet. Über die zweite Reibkupplung kann in einem entsprechenden Schaltvorgang eine weitere gewünschte Drehzahl der Antriebswelle des Nebenaggregates realisiert werden, die insbesondere größer als die erste Drehzahl der Antriebswelle des Nebenaggregates bei geschalteter erster Reibkupplung ist. Bei geschalteter erster Reibkupplung bzw. geschalteter zweiter Reibkupplung ist die jeweils andere Reibkupplung in der Regel nicht geschaltet.

In einer vorteilhaften Ausführungsform des Erfindungsgegenstandes ist die Riementriebanordnung derart ausgebildet, dass bei geschalteter zweiter Reibkupplung die Drehzahl der Antriebswelle des Nebenaggregates größer ist, als die Drehzahl des Antriebsrades. Somit kann eine Drehzahl-Übersetzung gewählt werden, was insbesondere beispielweise für Klimakompressoren bei hoher Kühlleistung vorteilhaft ist.

Es ist auch vorteilhaft, dass die Riementriebanordnung derart ausgebildet ist, dass bei geschalteter erster Reibkupplung die Drehzahl der Antriebswelle des Nebenaggregates kleiner ist als die Drehzahl des Antriebsrades. So kann eine vergleichsweise niedrige Drehzahl der Antriebswelle des Nebenaggregates eingerichtet werden, auch wenn die Drehzahl des Antriebsrades entsprechend vergleichsweise höher ist. Dies kann zum Beispiel dann vorteilhaft sein, wenn eine relativ geringe Leistung des Nebenaggregates beispielweise eine geringe Kühlleistung eines Klimakompressors eines Kraftfahrzeuges notwendig ist, wenn das Antriebsrad vergleichsweise schnell rotiert.

Weiter wird vorgeschlagen, dass eine Riemenspannvorrichtung zum Spannen der Treibriemen vorgesehen ist, mit der eine Abstandsveränderung zwischen den von jeweils einem Treibriemen umschlungenen Elementen möglich ist. Insbesondere ist ein Spannen durch eine Abstandsvergrößerung zwischen dem ersten Zwischenrad und dem Antriebsrad einerseits und dem zweiten Zwischenrad und dem Flanschring andererseits möglich. So können die Treibriemen jederzeit bzw. feinstufig gespannt werden.

Bevorzugt umfasst die Riemenspannvorrichtung einen Achsabschnitt, an welchem das erste Zwischenrad und das Antriebsrad drehbar aufgenommen sind. Dies ist insbesondere im Hinblick auf eine kompakte Bauform der erfindungsgemäßen Reibschaltkupplung vorteilhaft. Der Achsabschnitt kann beispielweise als drehfestes Zylinderprofil ausgebildet sein, dessen Längsachse parallel zur Drehachse der Antriebswelle des Nebenaggregates liegt. Beispielsweise kann der Achsabschnitt versetzbar an einem feststehenden Gehäuseabschnitt des Nebenaggregates aufgenommen sein. An dem Achsabschnitt lassen sich ein Zwischenrad und Antriebseinheit vorteilhaft über Wälzlager drehbar lagern bzw. mit diesem Teil gemeinsam montieren bzw. demontieren.

Die Erfindung betrifft außerdem eine Antriebseinheit mit einem Antriebsmotor für den Antrieb eines Nebenaggregates, insbesondere für einen Kompressor eines Fahrzeuges. Die Antriebseinheit umfasst eine Reibschaltkupplung gemäß einer der oben genannten Ausführungen. Damit kann eine Antriebseinheit bereitgestellt werden, welche die bereits zur Reibschaltkupplung erläuterten Vorteile und Merkmale aufweist.

Anhand der in der Zeichnung dargestellten einzigen Figur werden weitere Vorteile und Merkmale der Erfindung erläutert.

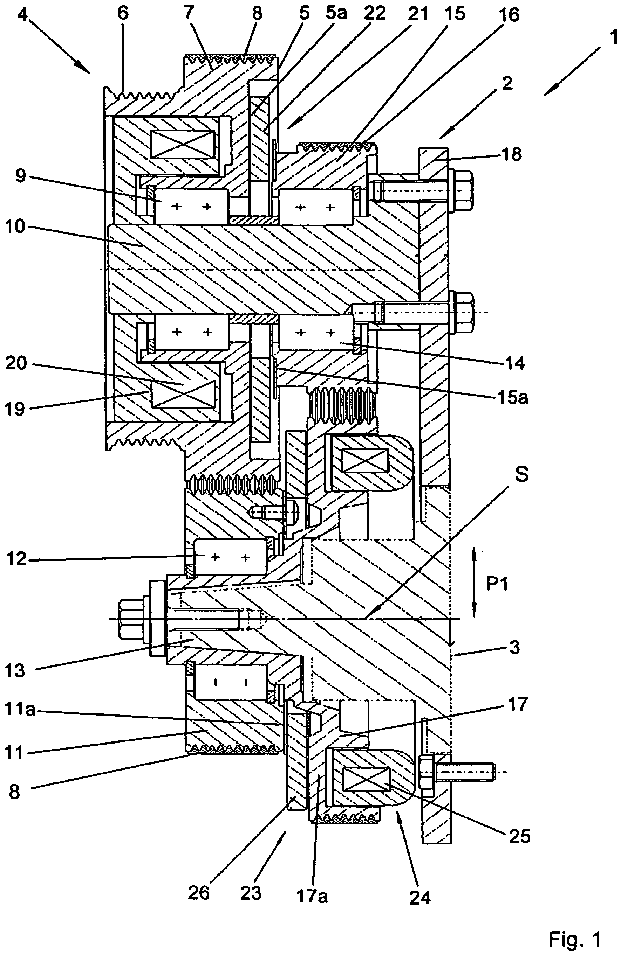

Figur 1 zeigt stark schematisiert eine Antriebsanordnung mit einem Kompressoraggregat und einer erfindungsgemäßen Reibschaltkupplung im Schnitt.

Darin umfasst eine Antriebseinheit 1 eine erfindungsgemäße Reibschaltkupplung 2 für einen Kompressor 3, beispielsweise einen Klimakompressor in einem Kraftfahrzeug. Über einen nur teilweise dargestellten Primärtrieb 4 wird über eine nicht gezeigte Motorriemenscheibe samt nicht dargestelltem Antriebsriemen eine Riemenscheibe 5 drehangetrieben. Der Antriebsriemen ist hierzu im Bereich einer mit keilförmigen umlaufenden Nuten versehenen Riemenauflage 6 in kraftübertragendem Kontakt mit der Riemenscheibe 5. Radial etwas nach außen absatzartig versetzt ist eine weitere umlaufende Riemenauflage 7 vorhanden, auf welcher ein Treibriemen 8 eines Sekundärriementriebs aufliegt.

Die Riemenscheibe 5 ist über ein Wälzkörperlager 9 auf einer drehfesten Zwischenwelle 10 gelagert.

Der Treibriemen 8 ist außerdem um ein erstes Zwischenrad 11 geführt, das zu einer Drehachse S einer Antriebswelle 13 des Kompressors 3 radial versetzt im gleichen axialen Abschnitt erstreckt wie die Riemenauflage 7. Das Zwischenrad 11 sitzt über ein weiteres Wälzkörperlager 12 drehbar auf der Antriebswelle 13.

Auf der Zwischenwelle 10 axial beabstandet bzw. versetzt zur Riemenscheibe 5 ist über ein weiteres Wälzkörperlager 14 ein weiteres Zwischenrad 15 drehbar gelagert, wobei auf dem Zwischenrad 15 ein weiterer Treibriemen 16 eines weiteren Sekundärriementriebs aufliegt. Der Treibriemen 16 ist außerdem um eine Riemenauflage eines Flanschrings 17 geführt, der fest mit der Antriebswelle 13 verbunden ist.

Die Zwischenwelle 10 ist über eine Trägerplatte 18 aufgenommen, die an einem Gehäuseabschnitt des Kompressors 3 fest verbunden ist. Zum Spannen der Treibriemen 8 und 16 kann die Trägerplatte 18 mit der daran angeschraubten Zwischenwelle 10 in Richtung entlang des Doppelpfeils P1 geringfügig versetzbar fixiert werden zum Beispiel über eine Schraube-Langloch-Anordnung.

Im gezeigten Ausführungsbeispiel gemäß Figur 1 sind die beiden Treibriemen 8 und 16 gleich lang und weisen dieselbe Riemenbreite auf, was im Hinblick auf eine Montagefreundlichkeit bzw. eine Ersatzteilbereitstellung vorteilhaft sein kann.

Die gezeigte Reibschaltkupplung 2 umfasst außerdem eine erste Elektromagnetanordnung 19 mit einem Elektromagneten 20, der bei Bestromung eine erste Ankerscheibe 22 einer ersten Reibkupplung 21 elektromagnetisch an einen Reibabschnitt 5a der Riemenscheibe 5 reibschlüssig anzieht. Die Ankerscheibe 22 ist hierzu über Federmittel 15a axial beweglich an dem Zwischenrad 15 aufgenommen. Bei nicht bestromtem Elektromagneten 20 wird durch die Rückstellkraft der Federmittel 15a die Ankerscheibe 22 axial vom Reibabschnitt 5a weggezogen, sodass die Riemenscheibe 5 und das Zwischenrad 15 zueinander über einen Spalt beabstandet und relativ zueinander frei drehbar sind.

Im Bereich des Flanschrings 17 ist eine zweite Reibkupplung 23 mit einer zweiten Elektromagnetanordnung 24 und einem zweiten Elektromagneten 25 vorgesehen. Die zweite Elektromagnetanordnung 24 kann bei Bestromung des Elektromagneten 25 eine Ankerscheibe 26, welche über Federmittel 11a axial beweglich an dem Zwischenrad 11 aufgenommen ist, an einen Reibabschnitt 17a des Flanschrings 17 herangezogen werden. Bei nicht bestromtem Elektromagneten 25 wird durch die rückstellenden Federmittel 11a die Ankerscheibe 26 vom Reibabschnitt 17a außer Kontakt gebracht, sodass der Flanschring 17 und das Zwischenrad 11 über einen Spalt zueinander beabstandet und zueinander frei drehbar sind.

Das mehrstufige Funktionsprinzip der Antriebseinheit 1 ist wie folgt:
Sind beide Elektromagnetanordnungen 19 und 24 nicht bestromt bzw. geschalten erfolgt keine Antriebswirkung von der Riemenscheibe 5 auf die Antriebswelle 13 des Kompressors 3. In dieser ersten Stufe arbeitet der Kompressor 3 nicht, wobei die Riemenscheibe angetrieben rotiert.

In einer zweiten Stufe wird bei bestromtem Elektromagneten 20 das Zwischenrad 15 reibschlüssig mit der Riemenscheibe 5 verbunden, sodass über den Treibriemen 16 der Flanschring 17 und damit die Antriebswelle 13 riemengetrieben aktiviert ist. Der Kompressor 3 wird mit untersetzter bzw. geringerer Drehzahl als die Drehzahl der Riemenscheibe 5 angetrieben.

In einer weiteren Stufe 3, bei welcher der Elektromagnet 20 nicht bestromt ist, jedoch durch Bestromung des Elektromagneten 25 der zweite Riementrieb aktiviert und das Zwischenrad 11 mit dem Flanschring 17 verbunden ist. Die Antriebswelle 13 bzw. der Kompressor 3 wird mit übersetzter bzw. höherer Drehzahl als die Drehzahl der Riemenscheibe 5 angetrieben.

Die beiden Stufen mit einer Unter- und einer Übersetzung der Drehzahl der Riemenscheibe 5 auf die Antriebswelle 13 wird dadurch ermöglicht, dass zur Übersetzung der Durchmesser im Bereich der Riemenauflage 7 der Riemenscheibe 5 größer ist als der Durchmesser der Riemenauflage für den Treibriemen 8 am Zwischenrad 11. Zur Untersetzung weist das Zwischenrad 15 im Bereich der Riemenauflage für den Treibriemen 16 einen geringeren Durchmesser auf als der Flanschring 17 im Bereich der Riemenauflage für den Treibriemen 16.

So kann insbesondere eine Übersetzung i, aus dem Quotienten des Durchmessers der Riemenauflage 7 und dem dazugehörigen Durchmesser der Riemenauflage am Zwischenrad 11 für den Treibriemen 8 bzw. eine Untersetzung mit dem Kehrwert 1/i aus dem Quotienten des Durchmessers für die Riemenauflage des Zwischenrades 15 und dem Durchmesser für die Riemenauflage des Flanschringes 17 realisiert werden, wenn die betreffenden Riemenauflagedurchmesser der beiden Zwischenräder 15 und 11 gleich sind und auch die Durchmesser der Riemenauflage 7 und des Riemenauflage am Flanschring 17 gleich sind.

Vorteilhafterweise kann damit bei sehr kompakter Bauweise eine besonders vorteilhafte Spreizung zwischen der Übersetzung i und der Untersetzung 1/i erreicht werden.

Prinzipiell lassen sich jedoch auch andere Über- bzw. Untersetzungsverhältnisse vorteilhaft nutzen.

### Bezugszeichenliste:

- 1: Antriebseinheit
- 2: Reibschaltkupplung
- 3: Kompressor
- 4: Primärantrieb
- 5: Riemenscheibe
- 5a: Reibabschnitt
- 6: Riemenauflage
- 7: Riemenauflage
- 8: Treibriemen
- 9: Wälzkörperlager
- 10: Zwischenwelle
- 11: Zwischenrad
- 11a: Federmittel
- 12: Wälzkörperlager
- 13: Antriebswelle
- 14: Wälzkörperlager
- 15: Zwischenrad
- 15a: Federmittel
- 16: Treibriemen
- 17: Flanschring
- 17a: Reibabschnitt
- 18: Trägerplatte
- 19: Elektromagnetanordnung
- 20: Elektromagnet
- 21: Reibkupplung
- 22: Ankerscheibe
- 23: Reibkupplung
- 24: Elektromagnetanordnung
- 25: Elektromagnet
- 26: Ankerscheibe

## Patentansprüche

1. Reibschaltkupplung mit einem von einem Antriebsmotor über einen Antriebsriemen angetriebenen Antriebsrad (5), wobei eine erste Elektromagnetanordnung (19) zur Betätigung einer ersten Reibkupplung (21) und eine zweite Elektromagnetanordnung (24) zur Betätigung einer zweiten Reibkupplung (23) vorgesehen sind, um bei einer Antriebsraddrehzahl über das Antriebsrad (5) eine Antriebswelle (13) eines Nebenaggregats (3) in unterschiedlichen Drehzahlen antreiben zu können, wobei eine Riementriebanordnung zwischen dem Antriebsrad (5) und der Antriebswelle (13) des Nebenaggregats (3) zum Antrieb der Antriebswelle (13) in den unterschiedlichen Drehzahlen vorgesehen ist, wobei die Riementriebanordnung einen ersten Riementrieb mit einem ersten Treibriemen (16) umfasst, welcher auf einem drehbar gelagerten ersten Zwischenrad (15) und einem drehfest mit der Antriebswelle (13) des Nebenaggregats (3) verbundenen Flanschring (17) aufliegt, wobei die Riementriebanordnung einen zweiten Riementrieb mit einem zweiten Treibriemen (8) umfasst, welcher auf dem Antriebsrad (5) und einem drehbar gelagerten zweiten Zwischenrad (11) aufliegt, **dadurch gekennzeichnet, dass** das erste Zwischenrad (15) schaltbar mit einem Gegenabschnitt (5a) am Antriebsrad (5) verbindbar ist und das zweite Zwischenrad (11) schaltbar mit einem Gegenabschnitt (17a) an einem Abschnitt (17), der drehfest mit der Antriebwelle (13) des Nebenaggregats (3) verbunden ist, kuppelbar ist.

2. Reibschaltkupplung nach Anspruch 1, **dadurch gekennzeichnet, dass** die Drehachse der Antriebswelle (13) des Nebenaggregats (3) parallel versetzt zur Drehachse des Antriebsrades (5) ist.

3. Reibschaltkupplung nach einem der vorhergehenden Ansprüche, **dadurch gekennzeichnet, dass** die erste Reibkupplung (21) ausgebildet ist, das erste Zwischenrad (15) und das Antriebsrad (5) bei geschalteter erster Reibkupplung (21) reibschlüssig zu verbinden.

4. Reibschaltkupplung nach einem der vorhergehenden Ansprüche, **dadurch gekennzeichnet, dass** die zweite Reibkupplung (23) ausgebildet ist, das zweite Zwischenrad (11) und den Flanschring (17) bei geschalteter zweiter Reibkupplung (23) reibschlüssig zu verbinden.

5. Reibschaltkupplung nach einem der vorhergehenden Ansprüche, **dadurch gekennzeichnet, dass** die Riementriebanordnung derart ausgebildet ist, dass bei geschalteter erster Reibkupplung (21) die Antriebswelle (13) des Nebenaggregats (3) in einer ersten Drehzahl dreht.

6. Reibschaltkupplung nach einem der vorhergehenden Ansprüche, **dadurch gekennzeichnet, dass** die Riementriebanordnung derart ausgebildet ist, dass bei geschalteter zweiter Reibkupplung (23) die Antriebswelle (13) des Nebenaggregats (3) in einer zweiten Drehzahl dreht, welche sich von der ersten Drehzahl bei geschalteter erster Reibkupplung (21) unterscheidet.

7. Reibschaltkupplung nach einem der vorhergehenden Ansprüche, **dadurch gekennzeichnet, dass** die Riementriebanordnung derart ausgebildet ist, dass bei geschalteter zweiter Reibkupplung (23) die Drehzahl der Antriebswelle (13) des Nebenaggregats (3) größer ist, als die Drehzahl des Antriebsrades (5).

8. Reibschaltkupplung nach einem der vorhergehenden Ansprüche, **dadurch gekennzeichnet, dass** die Riementriebanordnung derart ausgebildet ist, dass bei geschalteter erster Reibkupplung (21) die Drehzahl der Antriebswelle (13) des Nebenaggregats (3) kleiner ist, als die Drehzahl des Antriebsrades (5).

9. Reibschaltkupplung nach einem der vorhergehenden Ansprüche, **dadurch gekennzeichnet, dass** eine Riemenspannvorrichtung zum Spannen der Treibriemen (8; 16) vorgesehen ist, mit der eine Abstandsveränderung zwischen den von jeweils einem Treibriemen (8; 16) umschlungenen Elementen (5, 11; 15, 17) möglich ist.

10. Reibschaltkupplung nach einem der vorhergehenden Ansprüche, **dadurch gekennzeichnet, dass** die Riemenspannvorrichtung einen Achsabschnitt (10) umfasst, an welchem das erste Zwischenrad (15) und das Antriebsrad (5) drehbar aufgenommen sind.

11. Antriebseinheit mit einem Antriebsmotor für den Antrieb eines Nebenaggregates, insbesondere für einen Kompressor eines Fahrzeuges, mit einer Reibschaltkupplung nach einem der vorhergehenden Ansprüche.

## Claims

1. Switchable friction clutch with a drive wheel (5) driven by a drive motor via a drive belt, wherein a first electromagnet arrangement (19) is provided for actuating a first friction clutch (21), and a second electromagnet arrangement (24) is provided for actuating a second friction clutch (23) in order to be able to drive a drive shaft (13) of an auxiliary unit (3) at different rotational speeds via the drive wheel (5) at one rotational speed of the drive wheel, wherein a belt drive arrangement is provided between the drive wheel (5) and the drive shaft (13) of the auxiliary unit (3) for driving the drive shaft (13) at different speeds, wherein the belt drive arrangement comprises a first belt drive with a first driving belt (16), which is supported on a rotatably mounted first intermediate wheel (15) and a flange ring (17) connected in a non-rotatable manner to the drive shaft (13) of the auxiliary unit (3), wherein the belt drive arrangement comprises a second belt drive with a second driving belt (8), which is supported on the drive wheel (5) and a rotatably mounted second intermediate wheel (11), **characterised in that** the first intermediate wheel (15) can be connected switchably to a counter section (5a) on the drive wheel (5) and the second intermediate wheel (11) can be connected switchably to a counter section (17a) on a section (17) which is connected in a non-rotatable manner to the drive shaft (13) of the auxiliary unit (3).

2. Switchable friction clutch according to claim 1, **characterised in that** the axis of rotation of the drive shaft (13) of the auxiliary unit (3) is offset parallel to the axis of rotation of the drive wheel (5).

3. Switchable friction clutch according to one of the preceding claims, **characterised in that** the first friction clutch (21) is designed to connect the first intermediate wheel (15) and the drive wheel (5) frictionally when the first friction clutch (21) is selected.

4. Switchable friction clutch according to one of the preceding claims, **characterised in that** the second friction clutch (23) is designed to connect the second intermediate wheel (11) and the flange ring (17) frictionally when the second friction clutch (23) is selected.

5. Switchable friction clutch according to one of the preceding claims, **characterised in that** the belt drive arrangement is designed in such a way that, when the first friction clutch (21) is selected, the drive shaft (13) of the auxiliary unit (3) rotates at a first rotational speed.

6. Switchable friction clutch according to one of the preceding claims, **characterised in that** the belt drive arrangement is designed in such a way that, when the second friction clutch (23) is selected, the drive shaft (13) of the auxiliary unit (3) rotates at a second rotational speed, which differs from the first rotational speed with the first friction clutch (21) selected.

7. Switchable friction clutch according to one of the preceding claims, **characterised in that** the belt drive arrangement is designed in such a way that, when the second friction clutch (23) is selected, the rotational speed of the drive shaft (13) of the auxiliary unit (3) is higher than the rotational speed of the drive wheel (5).

8. Switchable friction clutch according to one of the preceding claims, **characterised in that** the belt drive arrangement is designed in such a way that, when the first friction clutch (21) is selected, the rotational speed of the drive shaft (13) of the auxiliary unit (3) is lower than the rotational speed of the drive wheel (5).

9. Switchable friction clutch according to one of the preceding claims, **characterised in that** a belt tensioning device is provided for tensioning the driving belts (8; 16), by means of which it is possible to change the distance between the elements (5, 11; 15, 17) wrapped around by respective driving belts (8; 16).

10. Switchable friction clutch according to one of the preceding claims, **characterised in that** the belt tensioning device comprises a shaft section (10), on which the first intermediate wheel (15) and the drive wheel (5) are rotatably mounted.

11. Drive unit with a drive motor for driving an auxiliary unit, in particular for a compressor of a vehicle, comprising a switchable friction clutch according to one of the preceding claims.

## Revendications

1. Embrayage à friction comportant une roue d'entraînement (5) entraînée par un moteur par l'intermédiaire d'une courroie d'entraînement,
* un premier dispositif électromagnétique (19) actionnant un premier embrayage à friction (21) et un second dispositif électromagnétique (24) actionnant un second embrayage à friction (23) pour entraîner à des vitesses de rotation différentes, l'arbre d'entraînement (13) d'un équipement accessoire (3) par la roue d'entraînement (5) pour une vitesse de rotation de la roue d'entraînement,
* un dispositif d'entraînement à courroies entre la roue d'entraînement (5) et l'arbre d'entraînement (13) de l'équipement accessoire (3) pour entraîner cet arbre (13) à des vitesses de rotation différentes,
* le dispositif d'entraînement à courroies comportant un premier entraînement à courroie avec une première courroie (16) passant sur une première roue intermédiaire (15) montée à rotation et une bride annulaire (17) solidaire en rotation de l'arbre d'entraînement (13) de l'équipement accessoire (3),
* le dispositif à courroies ayant un second entraînement à courroie avec une seconde courroie (8) passant sur la roue d'entraînement (5) et sur une seconde roue intermédiaire (11) montée à rotation, embrayage **caractérisé en ce que**
- la première roue intermédiaire (15) est reliée de manière commutable à un segment opposé (5a) de la roue d'entraînement (5), et
- la seconde roue intermédiaire (11) est reliée de manière embrayable à un segment complémentaire (17a) d'un segment (17) relié solidairement en rotation à l'arbre d'entraînement (13) de l'équipement accessoire (3).

2. Embrayage à friction selon la revendication 1,
**caractérisé en ce que**
l'axe de rotation de l'arbre d'entraînement (13) de l'équipement auxiliaire (3) est parallèle et décalé par rapport à l'axe de rotation de la roue d'entraînement (5).

3. Embrayage à friction selon l'une des revendications précédentes,
**caractérisé en ce que**
le premier embrayage à friction (21) est réalisé pour relier la première roue intermédiaire (15) et la roue d'entraînement (5) par une liaison par friction lorsque le premier embrayage à friction (21) est embrayé.

4. Embrayage à friction selon l'une des revendications précédentes,
**caractérisé en ce que**
le second embrayage à friction (23) est réalisé pour relier par une liaison par friction la seconde roue intermédiaire (11) et la bride annulaire (17) lorsque le second embrayage à friction (23) est embrayé.

5. Embrayage à friction selon l'une des revendications précédentes,
**caractérisé en ce que**
le dispositif d'entraînement à courroies est réalisé de façon que lorsque le premier embrayage à friction (21) est embrayé, l'arbre d'entraînement (13) de l'équipement auxiliaire (3) tourne à une première vitesse de rotation.

6. Embrayage à friction selon l'une des revendications précédentes,
**caractérisé en ce que**
le dispositif d'entraînement à courroies est réalisé pour que lorsque le second embrayage à friction (23) est embrayé, l'arbre d'entraînement (13) de l'équipement auxiliaire (3) tourne à une seconde vitesse de rotation différente de la première vitesse de rotation lorsque le premier embrayage (21) est embrayé.

7. Embrayage à friction selon l'une des revendications précédentes,
**caractérisé en ce que**
le dispositif d'entraînement à courroies est réalisé pour que lorsque le second embrayage à friction (23) est embrayé, la vitesse de rotation de l'arbre d'entraînement (13) de l'équipement auxiliaire (3) soit supérieure à la vitesse de rotation de la roue d'entraînement (5).

8. Embrayage à friction selon l'une des revendications précédentes,
**caractérisé en ce que**
le dispositif d'entraînement à courroies est réalisé pour que lorsque le premier embrayage à friction (21) est embrayé, la vitesse de rotation de l'arbre d'entraînement (13) de l'équipement auxiliaire (3) est inférieure à la vitesse de rotation de la roue d'entraînement (5).

9. Embrayage à friction selon l'une des revendications précédentes,
**caractérisé en ce qu'**
il est prévu un dispositif de tension de courroies pour tendre les courroies (8, 16), permettant de modifier la distance entre les éléments (5, 11 ; 15, 17) respectivement entourés par une courroie (8, 16).

10. Embrayage à friction selon l'une des revendications précédentes,
**caractérisé en ce que**
le dispositif d'entraînement à courroies comporte un segment d'axe (10) recevant à rotation la première roue intermédiaire (15) et la roue d'entraînement (5).

11. Unité d'entraînement comportant un moteur pour l'entraînement d'un équipement accessoire, notamment d'un compresseur de véhicule automobile, comportant un embrayage à friction selon l'une des revendications précédentes.
